# EUROPÄISCHE PATENTSCHRIFT

(11) **EP 3 444 493 B1**
(45) Veröffentlichungstag und Bekanntmachung des Hinweises auf die Patenterteilung: **04.12.2019**
(21) Anmeldenummer: 18000655.3
(22) Anmeldetag: 07.08.2018
(51) Int. Cl.: F16D 23/02, B21K 1/76

(54) **VERFAHREN ZUR HERSTELLUNG EINES SYNCHRONRINGS UND ZUGEHÖRIGER SYNCHRONRING**
METHOD FOR MANUFACTURING A SYNCHRONISER RING AND ASSOCIATED SYNCHRONISER RING
PROCÉDÉ DE FABRICATION D'UNE BAGUE DE SYNCHRONISATION ET BAGUE DE SYNCHRONISATION ASSOCIÉE

(30) Priorität: 19.08.2017 DE 102017007892
(43) Veröffentlichungstag der Anmeldung: 20.02.2019
(73) Patentinhaber: Diehl Metall Stiftung & Co. KG, 90552 Röthenbach (DE)
(72) Erfinder: Arbak, Murat, DE - 91207 Lauf an der Pegnitz (DE)
(74) Vertreter: Diehl Patentabteilung

(56) Entgegenhaltungen:
- DE-B3-102009 026 192
- US-A1- 2015 354 638

## Beschreibung

Die Erfindung betrifft ein Verfahren zur Herstellung eines Synchronrings für eine Synchronisiereinrichtung, bei dem durch ein Schmiedeverfahren sich radial nach außen oder sich radial nach innen erstreckende Sperrzähne gebildet werden, die jeweils einen Flankenabschnitt und zwei schräge, in einem gemeinsamen Dachfirst mündende Dachflanken aufweisen.

Synchronisiereinrichtungen sind Bestandteile von manuellen bzw. automatisierten Schaltgetrieben für Kraftfahrzeuge. Ein Synchronring dient dazu, bei einem Schaltvorgang die Drehgeschwindigkeiten einer Schiebemuffe und eines Gangrads eines gewählten Gangs durch Erzeugen von Reibung aneinander anzugleichen. Wenn beide Komponenten dieselbe Drehzahl aufweisen, kann die Schaltmuffe axial verschoben werden, wodurch der gewünschte Gang eingelegt wird.

Synchronringe können durch Kaltschmieden eines Stahlblechs oder durch Warmschmieden eines Messingrohlings oder durch Sintern bzw. Sinterschmieden hergestellt werden. In einem Folgeverbundwerkzeug oder in einem Transferwerkzeug wird dabei in mehreren Schritten die gewünschte Kontur erzeugt (grundsätzlich nur beim Kaltschmieden). Am Ende des Umformverfahrens erfolgt die Formfüllung im Bereich des Dachfirsts der Sperrzähne. Die Sperrzähne umfassen einen Flankenabschnitt und zwei Schrägen, in einem gemeinsamen Dachfirst mündende Dachflanken. In der Praxis ist eine vollständige Formfüllung im Bereich des Dachfirsts nicht möglich. Daher weisen herkömmliche Synchronringe immer einen Dachfirst, d. h. eine Dachfirstfläche, auf, die eine gewisse Firstbreite besitzt. Zudem entstehen Radien an beiden Dachflanken. Die Firstbreite ist von vielen Einflussparametern abhängig, wie z. B. dem verwendeten Werkstoff, der Blechdicke bei einem aus Stahlblech hergestellten Synchronring, der Zahngeometrie und insbesondere vom Winkel der Dachflanken. Zudem wirken sich bei der Formgebung auch Reibung und Temperatur auf die Breite des Dachfirsts aus. Damit der Synchronring seine Funktion erfüllen kann, darf eine bestimmte Breite des Dachfirsts nicht überschritten werden. Wünschenswert wäre eine scharfe Kante zwischen den beiden Dachflanken, d. h. ein Dachfirst mit einer Breite, die gegen Null geht.

Ein herkömmlicher Synchronring ist aus DE 10 2014 107 926 A1 bekannt.

Die Breite des Dachfirsts ist abhängig von der Blechstärke. Es wird generell angestrebt, die Blechstärke zu verringern. Eine Verringerung der Blechstärke ist bei anderen Funktionselementen eines Synchronrings möglich. Begrenzend ist dabei jedoch die für die Funktion erforderliche Geometrie eines Sperrzahns, insbesondere wird eine bestimmte Zahnhöhe benötigt. Diese benötigte Zahnhöhe bestimmt die minimale Blechdicke des Stahlblechs, aus dem der Synchronring hergestellt wird.

Der Erfindung liegt daher die Aufgabe zu Grunde, ein Verfahren zur Herstellung eines Synchronrings anzugeben, bei dem Stahlblech mit einer verringerten Dicke verwendet werden kann, ohne dass sich dadurch Einschränkungen der Funktionalität des Synchronrings ergeben.

Zur Lösung dieser Aufgabe ist bei einem Verfahren der eingangs genannten Art erfindungsgemäß vorgesehen, dass an der dem Dachfirst gegenüberliegenden Rückseite eines Sperrzahns eine Vertiefung geformt wird. Vorzugsweise erfolgt dies durch Prägen der gewünschten Form.

Die Erfindung beruht auf der Erkenntnis, dass durch das Prägen der Vertiefung an der Rückseite des Sperrzahns während des Umformvorgangs ein Materialfluss in Richtung des aus den Dachflanken und dem Dachfirst bestehenden Zahndachs erreicht werden kann, wodurch die Formfüllung des Dachfirsts verbessert wird.

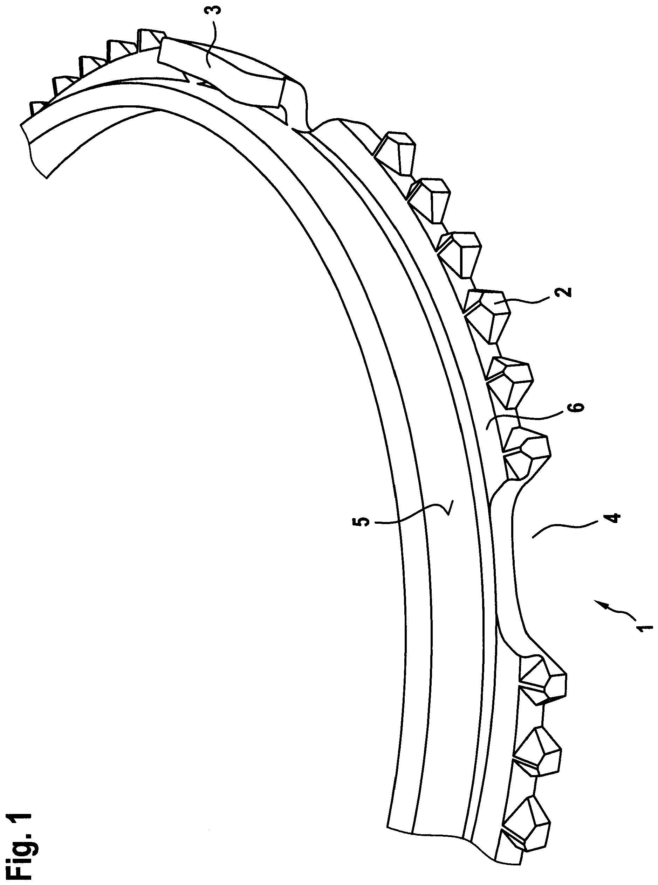

Demgegenüber hat man bisher die benötigte Formfüllung durch eine kostenintensive Optimierung der Präge- und Stanzprozesse realisiert. Beispielsweise wurden die Sperrzähne gezielt länger geprägt, anschließend wurde die Endgeometrie gestanzt. Dafür war es jedoch erforderlich, einen Rohling, insbesondere ein Stahlblech oder eine Ronde, mit einer Mindestdicke zu verwenden, wobei diese Mindestdicke für die anderen Komponenten des Synchronrings, z.B. für die Ringfläche (siehe Bezugsziffer 5 in Fig. 1) sowie für den Bund (siehe Bezugsziffer 6 in Fig. 1) nicht notwendig war.

Im Rahmen der Erfindung wurde festgestellt, dass durch Prägen der Vertiefung ein Materialfluss in Richtung zum Dachfirst erzeugt werden kann, wodurch die erforderliche Dachhöhe erhalten wird. Der Vorteil des erfindungsgemäßen Verfahrens ist darin zu sehen, dass eine verbesserte Formfüllung im Bereich des Dachfirsts erreicht wird. Zudem ist der Umformprozess robust, selbst bei einer ungünstigen Konstellation der Einflussparameter, zu denen ein verwendetes Schmiermittel, Materialeigenschaften des Rohlings, die Stanzqualität usw. zählen. Durch das erfindungsgemäße Verfahren kann ein Synchronring aus einem Blech, das eine geringere Dicke aufweist, hergestellt werden, wodurch sich eine Gewichtsreduktion ergibt.

Eine Variante des erfindungsgemäßen Verfahrens sieht vor, dass eine zumindest näherungsweise halbkugelförmige oder kugelkalottenförmige Vertiefung geprägt wird. Diese Vertiefung wird in die Rückseite des Sperrzahns geprägt, d. h. in die dem Dachfirst gegenüberliegende Seite.

Eine alternative Ausgestaltung des erfindungsgemäßen Verfahrens sieht vor, dass eine tropfenförmige Vertiefung geprägt wird, die an einem Ende kugelförmig und an dem anderen Ende spitz geformt ist, wobei das spitze Ende radial nach innen gerichtet ist. Die Vertiefung besitzt somit die Form eines halben Tropfens. Alternativ kann es auch vorgesehen sein, dass eine tropfenförmige Vertiefung geprägt wird, die an einem Ende kugelförmig und an dem anderen Ende spitz geformt ist, wobei das spitze Ende radial nach außen gerichtet ist.

Eine weitere Variante des erfindungsgemäßen Verfahrens sieht vor, dass eine Vertiefung geprägt wird, deren axiale Ausnehmung radial nach außen zunimmt. Die Vertiefung kann sich beispielsweise in der radial äußeren Hälfte einer Bundfläche des Synchronrings erstrecken.

Eine Alternative sieht vor, dass eine Vertiefung geprägt wird, die als sich in Radialrichtung erstreckende Nut ausgebildet ist. Die Nut kann sich somit in Radialrichtung über die gesamte Länge erstrecken. Vorzugsweise kann die Tiefe der Nut radial nach außen zunehmen. Vorzugsweise kann die Nut (in Draufsicht auf die Stirnseite des Sperrzahns bzw. in radialer Blickrichtung) einen rechteck- oder dreieck- oder halbrundförmigen Querschnitt aufweisen.

Bei dem erfindungsgemäßen Verfahren wird es besonders bevorzugt, dass der Synchronring aus einem Blech hergestellt wird, dessen Dicke 1,5 mm bis 3,0 mm, vorzugsweise 1,6 mm bis 1,9 mm, beträgt.

Daneben betrifft die Erfindung einen Synchronring für eine Synchronisiereinrichtung, der durch ein Schmiedeverfahren hergestellte, sich radial nach außen oder sich radial nach innen erstreckende Sperrzähne aufweist, die jeweils einen Flankenabschnitt und zwei schräge, in einem gemeinsamen Dachfirst mündende Dachflanken aufweisen.

Der erfindungsgemäße Synchronring zeichnet sich dadurch aus, dass an der der Dachflanke gegenüberliegenden Rückseite eines Sperrzahns eine Vertiefung geprägt ist.

Vorzugsweise ist der erfindungsgemäße Synchronring nach einem Verfahren der beschriebenen Art hergestellt.

Bei dem erfindungsgemäßen Synchronring wird es bevorzugt, dass er eine der folgenden Vertiefungen aufweist:
- eine zumindest näherungsweise als Halbkugel oder als Kugelkalotte ausgebildete Vertiefung;
- eine tropfenförmige Vertiefung, die an einem Ende kugelförmig und an dem an-deren Ende spitz geformt ist, wobei das spitze Ende entweder radial nach innen oder radial nach außen gerichtet ist;
- eine Vertiefung, deren axiale Ausdehnung radial nach außen zunimmt;
- eine Vertiefung, die als sich in Radialrichtung erstreckende Nut ausgebildet ist, wobei die Tiefe der Nut vorzugsweise radial nach außen zunimmt.

Eine bevorzugte Ausführung des erfindungsgemäßen Synchronrings sieht vor, dass die maximale Tiefe der Vertiefung 0,3 mm bis 1,2 mm, vorzugsweise etwa 0,6 mm, beträgt.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: einen Ausschnitt eines nach dem erfindungsgemäßen Verfahren hergestellten Synchronrings in einer perspektivischen Ansicht,
- Fig. 2: eine vergrößerte Ansicht eines Sperrzahns des Synchronrings von Fig. 1,
- Fig. 3: eine Draufsicht eines Abschnitts des Synchronrings von Fig. 1,
- Fig. 4: einen Schnitt entlang der Linie IV-IV von Fig. 3,
- Fig. 5: eine ähnliche Ansicht wie Fig. 4 mit einer anders ausgebildeten Vertiefung,
- Fig. 6: ein weiteres Ausführungsbeispiel einer Vertiefung,
- Fig. 7: ein weiteres Ausführungsbeispiel einer Vertiefung,
- Fig. 8: ein weiteres Ausführungsbeispiel einer Vertiefung, und
- Fig. 9: ein weiteres Ausführungsbeispiel einer Vertiefung.

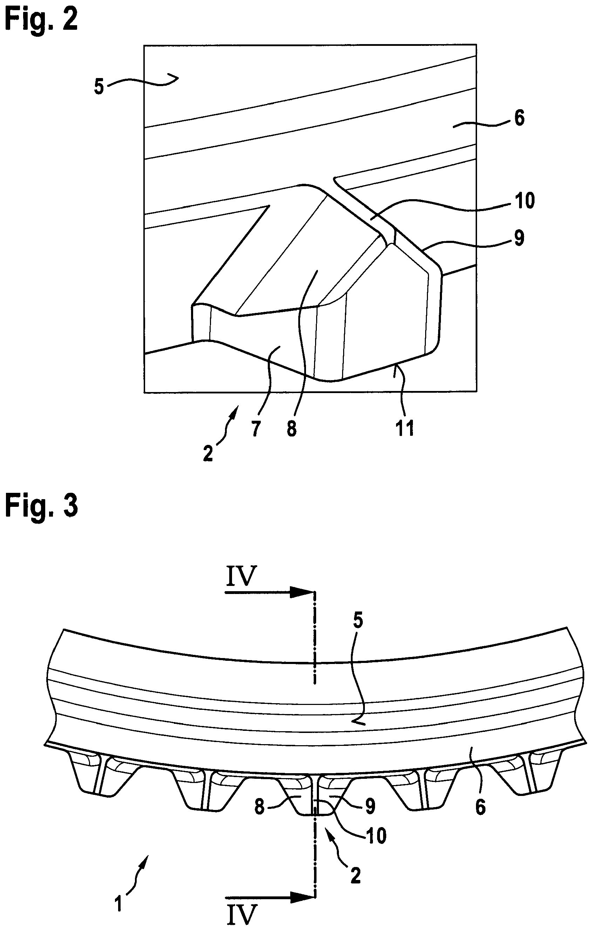

Der in Fig. 1 ausschnittsweise in einer perspektivischen Ansicht gezeigte Synchronring 1 wird durch ein Schmiedeverfahren hergestellt, in dessen Verlauf sich radial nach außen oder nach innen erstreckende Sperrzähne 2 gebildet werden. Der Synchronring 1 umfasst mehrere über den Umfang verteilte Indexlaschen 3 sowie Ausnehmungen 4. An eine sich in Axialrichtung erstreckende Ringfläche 5 schließt sich ein in Radialrichtung erstreckender Bund 6 an. Der Bund 6 weist die in Umfangsrichtung voneinander beabstandeten Sperrzähne 2 auf. In der vergrößerten Ansicht von Fig. 2 erkennt man, dass der Sperrzahn 2 einen Flankenabschnitt 7 aufweist, an den sich zwei schräge, zueinander geneigte Dachflanken 8, 9 anschließen, die in einem Dachfirst 10 münden. Der Dachfirst 10 ist eine ebene Fläche (je nach Breite; bei genug Breite entsteht eine ebene Fläche), die vorzugsweise in der durch den Bund 6 aufgespannten Ebene liegt.

In dem dargestellten Ausführungsbeispiel wird der Synchronring 1 durch Kaltschmieden eines Stahlblechs, das zunächst zu einer Ronde gebogen und in mehreren Schritten gestanzt und gepresst wird, hergestellt. Der in Fig. 2 gezeigte Dachfirst 10 ist unerwünscht bzw. es wird angestrebt, einen Dachfirst mit einer möglichst geringen Breite zu erzeugen, so dass eine scharfe Kante zwischen den beiden Dachflanken 8, 9 entsteht. Um sicherzustellen, dass während des Umformvorgangs eine möglichst hohe Formfüllung im Bereich des Dachfirsts erzielt wird, wird an der dem Dachfirst 10 gegenüberliegenden Rückseite 11 des Sperrzahns 2 eine Vertiefung geprägt.

Fig. 3 zeigt den Synchronring 1 mit den Sperrzähnen 2, den einander gegenüberliegenden Dachflanken 8, 9 und den Dachfirst 10 in einer Draufsicht.

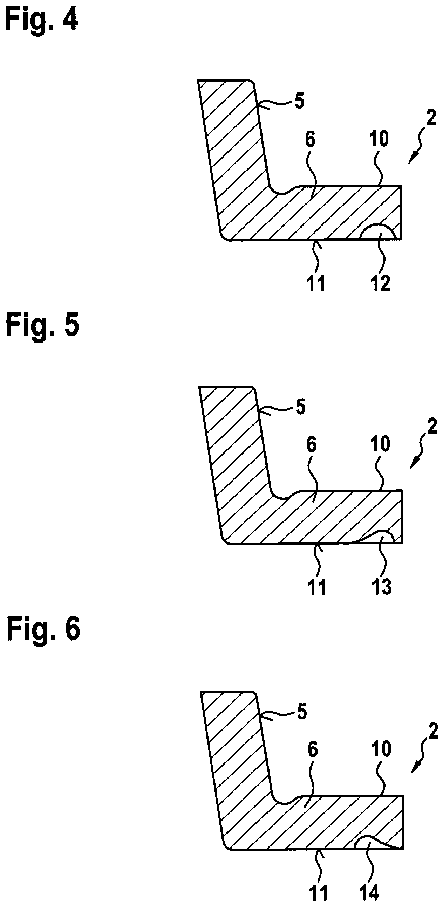

Fig. 4 ist eine geschnittene Ansicht entlang der Linie IV-IV von Fig. 3. In Fig. 4 erkennt man, dass an der Rückseite 11 des Sperrzahns 2, die dem Dachfirst 10 gegenüberliegt, eine Vertiefung 12 geprägt ist. In dem dargestellten Ausführungsbeispiel ist die Vertiefung 12 zumindest näherungsweise kugelkalottenförmig ausgebildet. Der Schritt des Prägens der Vertiefung 12 kann vor dem Schritt des Prägens der Dachflanken 8, 9 durchgeführt werden. Es ist jedoch auch möglich, die Vertiefung 12 und die Dachflanken 8, 9 gleichzeitig oder auch später in einem letzten Präge- bzw. Umformschritt zu erzeugen.

Die geprägte Vertiefung 12 bewirkt während des Umformvorgangs einen Materialfluss zum Dachfirst 10 hin, wodurch die Höhe des durch die Dachflanken 8, 9 und den Dachfirst 10 gebildeten Dachs das erforderliche Niveau erreicht.

Im Gegensatz dazu weist herkömmliche Synchronringe einen massiven Sperrzahn auf. Eine Verringerung der zur Herstellung des Synchronrings verwendeten Blechdicke unter einem bestimmten Wert ist bei einem herkömmlichen Verfahren nicht möglich, da ansonsten die benötigte Höhe der Sperrzähne nicht erreicht werden kann.

Gemäß dem beschriebenen Verfahren bewirkt die an der Rückseite 11 des Sperrzahns 2 angebrachte Vertiefung 12 eine verbesserte Formfüllung im Bereich des Dachfirsts 10, so dass dieser eine minimale Breite aufweist.

In dem dargestellten Ausführungsbeispiel wird der Synchronring 1 aus Stahlblech mit einer Dicke von 1,8 mm hergestellt, während herkömmliche Synchronringe eine Blechdicke von z. B. 2,2 mm erfordern. Der Vorteil des beschriebenen Verfahrens ist auch darin zu sehen, dass die Robustheit des Umformprozesses durch die geprägten Vertiefungen erhöht wird, so dass andere Einflussgrößen wie Schmiermittel, Stanzqualität, Temperatur oder Reibungskräfte sich nicht wesentlich auf die Qualität des hergestellten Synchronrings auswirken.

Fig. 5 ist eine ähnliche geschnittene Ansicht wie Fig. 4 und zeigt ein weiteres Ausführungsbeispiel eines Synchronrings, der an der Rückseite 11 des Sperrzahns 2 eine Vertiefung 13 aufweist. Die Vertiefung 13 ist tropfenförmig ausgebildet und weist ein kugelförmiges Ende und ein gegenüberliegendes spitzes Ende auf. Das spitze Ende ist radial nach innen gerichtet. Die Vertiefung 13 hat - wie in Fig. 5 gezeigt ist - die Form eines halben Tropfens.

Fig. 6 ist eine ähnliche geschnittene Ansicht wie Fig. 5 und zeigt eine Vertiefung 14, die dieselbe "Halbtropfenform" wie die Vertiefung 13 von Fig. 5 aufweist. Allerdings ist das spitze Ende radial nach außen gerichtet, während das kugelförmige Ende radial nach innen weist. In Übereinstimmung mit den vorangehenden Ausführungsbeispielen bewirkt die tropfenförmige Vertiefung 14 während des Umformprozesses einen Materialfluss zum Dachfirst 10 hin.

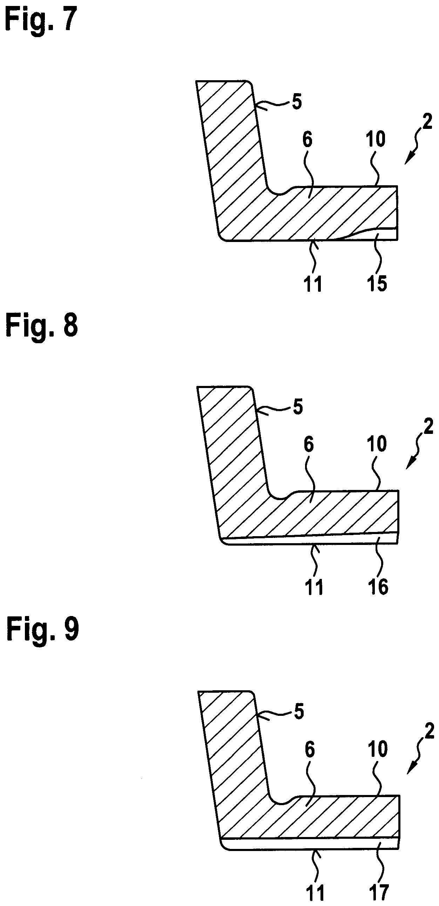

Fig. 7 ist eine geschnittene Ansicht eines weiteren Ausführungsbeispiels eines Synchronrings 1. An der Rückseite 11 befindet sich eine Vertiefung 15, deren Tiefe in Axialrichtung entlang einer kurvenförmigen Bahn radial nach außen zunimmt. Die Vertiefung 15 erstreckt sich bis zum radial äußeren Ende des Sperrzahns 2.

Fig. 8 ist eine geschnittene Ansicht eines weiteren Ausführungsbeispiels eines Sperrzahns 2, in dessen Rückseite 11 eine Vertiefung 16 geprägt ist, die als sich in Radialrichtung erstreckende Nut ausgebildet ist. In Fig. 8 erkennt man, dass die Tiefe der Nut radial nach außen zunimmt. In diesem Ausführungsbeispiel weist die nutförmige Vertiefung 16 einen zumindest näherungsweise halbkugelförmigen Querschnitt auf. Auch die Vertiefung 16 bewirkt während des Umformprozesses den gewünschten Materialfluss zum Dachfirst 10 hin, wodurch sich eine besonders gute Formfüllung ergibt.

Fig. 9 ist eine geschnittene Ansicht eines ähnlichen Ausführungsbeispiels wie in Fig. 8. Eine Vertiefung 17 ist in Übereinstimmung mit dem vorangehenden Ausführungsbeispiel als Nut ausgebildet, deren Tiefe konstant ist. Die nutförmige Vertiefung 17 weist vorzugsweise (in Draufsicht auf die Stirnseite des Sperrzahns bzw. in radialer Blickrichtung) einen rechteck- oder dreieck- oder halbrundförmigen Querschnitt auf.

### Bezugszeichenliste

- 1: Synchronring
- 2: Sperrzahn
- 3: Indexlaschen
- 4: Ausnehmung
- 5: Ringfläche
- 6: Bund
- 7: Flankenabschnitt
- 8, 9: Dachflanke
- 10: Dachfirst
- 11: Rückseite
- 12: Vertiefung
- 13: Vertiefung
- 14: Vertiefung
- 15: Vertiefung
- 16: Vertiefung
- 17: Vertiefung

## Patentansprüche

1. Verfahren zur Herstellung eines Synchronrings (1) für eine Synchronisiereinrichtung, bei dem durch ein Schmiedeverfahren sich radial nach außen oder innen erstreckende Sperrzähne (2) gebildet werden, die jeweils einen Flankenabschnitt (7) und zwei schräge, in einem gemeinsamen Dachfirst (10) mündende Dachflanken (8, 9) aufweisen,
**dadurch gekennzeichnet,**
**dass** an der dem Dachfirst (10) gegenüberliegenden Rückseite (11) eines Sperrzahns (2) eine Vertiefung (12, 13, 14, 15, 16, 17) geformt wird.

2. Verfahren nach Anspruch 1,
**dadurch gekennzeichnet,**
**dass** eine zumindest näherungsweise halbkugelförmige oder kugelkalottenförmige Vertiefung (12) geprägt wird.

3. Verfahren nach Anspruch 1,
**dadurch gekennzeichnet,**
**dass** eine tropfenförmige Vertiefung (13) geprägt wird, die an einem Ende kugelförmig und an dem anderen Ende spitz geformt ist, wobei das spitze Ende radial nach innen gerichtet ist.

4. Verfahren nach Anspruch 1,
**dadurch gekennzeichnet,**
**dass** eine tropfenförmige Vertiefung (14) geprägt wird, die an einem Ende kugelförmig und an dem anderen Ende spitz geformt ist, wobei das spitze Ende radial nach außen gerichtet ist.

5. Verfahren nach Anspruch 1,
**dadurch gekennzeichnet,**
**dass** eine Vertiefung (15) geprägt wird, deren axiale Ausdehnung radial zum Zahnende hin zunimmt.

6. Verfahren nach Anspruch 1,
**dadurch gekennzeichnet,**
**dass** eine Vertiefung (16, 17) geprägt wird, die als sich in Radialrichtung erstreckende Nut ausgebildet ist.

7. Verfahren nach Anspruch 6,
**dadurch gekennzeichnet,**
**dass** die Tiefe der Nut radial zum Zahnende hin zunimmt.

8. Verfahren nach einem der vorangehenden Ansprüche,
**dadurch gekennzeichnet,**
**dass** der Synchronring (1) aus einem Blech hergestellt wird, dessen Dicke 1,5 mm bis 3,0 mm, vorzugsweise 1,6 mm bis 1,9 mm, beträgt.

9. Synchronring (1) für eine Synchronisiereinrichtung, der durch ein Schmiedeverfahren hergestellte, sich radial nach außen oder innen erstreckende Sperrzähne (2) aufweist, die jeweils einen Flankenabschnitt (7) und zwei schräge, in einem gemeinsamen Dachfirst (10) mündende Dachflanken (8, 9) aufweisen,
**dadurch gekennzeichnet,**
**dass** an der der Dachflanke (8, 9) gegenüberliegenden Rückseite (11) eines Sperrzahns (2) eine Vertiefung (12, 13, 14, 15, 16, 17) geformt ist.

10. Synchronring (1) nach Anspruch 9,
**dadurch gekennzeichnet,**
**dass** er durch ein Verfahren nach einem der Ansprüche 1 bis 8 hergestellt ist.

11. Synchronring (1) nach Anspruch 9 oder 10,
**dadurch gekennzeichnet,**
**dass** er eine der folgenden Vertiefungen (12, 13, 14, 15, 16, 17) aufweist:
- eine zumindest näherungsweise als Halbkugel oder als Kugelkalotte ausgebildete Vertiefung;
- eine tropfenförmige Vertiefung, die an einem Ende kugelförmig und an dem anderen Ende spitz geformt ist, wobei das spitze Ende entweder radial nach innen oder radial nach außen gerichtet ist;
- eine Vertiefung, deren axiale Ausdehnung radial nach außen zunimmt;
- eine Vertiefung, die als sich in Radialrichtung erstreckende Nut ausgebildet ist, wobei die Tiefe der Nut vorzugsweise radial zum Zahnende hin zunimmt.

12. Synchronring (1) nach einem der Ansprüche 9 bis 11,
**dadurch gekennzeichnet,**
**dass** die maximale Tiefe der Vertiefung 0,3 mm bis 1,2 mm, vorzugsweise etwa 0,6 mm, beträgt.

13. Synchronring (1) nach einem der Ansprüche 9 bis 12,
**dadurch gekennzeichnet,**
**dass** der Synchronring (1) aus einem Blech hergestellt ist, dessen Dicke 1,5 mm bis 3,0 mm, vorzugsweise 1,6 mm bis 1,9 mm, beträgt.

## Claims

1. Method for producing a synchronizer ring (1) for a synchronizing device, in which blocking teeth (2) extending radially outwards or inwards are produced by a forging method, said blocking teeth each having a flank portion (7) and two oblique top flanks (8, 9) merging into a common top ridge (10),
**characterized**
**in that** a depression (12, 13, 14, 15, 16, 17) is formed on the rear side (11) of a blocking tooth (2) opposite the top ridge (10).

2. Method according to Claim 1,
**characterized**
**in that** an at least approximately hemi-spherical or spherical cup-shaped depression (12) is stamped.

3. Method according to Claim 1,
**characterized**
**in that** a drop-shaped depression (13) is stamped, which is spherically shaped at one end and pointed in shape at the other end, wherein the pointed end is oriented radially inwards.

4. Method according to Claim 1,
**characterized**
**in that** a drop-shaped depression (14) is stamped, which is spherically shaped at one end and pointed in shape at the other end, wherein the pointed end is oriented radially outwards.

5. Method according to Claim 1,
**characterized**
**in that** a depression (15) is stamped, the axial extent of which increases radially towards the end of the tooth.

6. Method according to Claim 1,
**characterized**
**in that** a depression (16, 17) is stamped which is designed as a groove extending in the radial direction.

7. Method according to Claim 6,
**characterized**
**in that** the depth of the groove increases radially towards the end of the tooth.

8. Method according to one of the preceding claims,
**characterized**
**in that** the synchronizer ring (1) is produced from a metal sheet, the thickness of which is 1.5 mm to 3.0 mm, preferably 1.6 mm to 1.9 mm.

9. Synchronizer ring (1) for a synchronizing device, which has blocking teeth (2) which are produced by a forging method, which extend radially outwards or inwards said blocking teeth each having a flank portion (7) and two oblique top flanks (8, 9) merging into a common top ridge (10),
**characterized**
**in that** a depression (12, 13, 14, 15, 16, 17) is formed on the rear side (11) of a blocking tooth (2) opposite the top flank (8, 9).

10. Synchronizer ring (1) according to Claim 9,
**characterized**
**in that** it is produced by a method according to one of Claims 1 to 8.

11. Synchronizer ring (1) according to Claim 9 or 10,
**characterized**
**in that** it has one of the following depressions (12, 13, 14, 15, 16, 17):
- a depression designed at least approximately as a hemisphere or spherical cup;
- a drop-shaped depression, which is spherically shaped at one end and pointed in shape at the other end, wherein the pointed end is oriented either radially inwards or radially outwards;
- a depression, the axial extent of which increases radially outwards;
- a depression which is designed as a groove extending in the radial direction, wherein the depth of the groove preferably increases radially towards the end of the tooth.

12. Synchronizer ring (1) according to one of Claims 9 to 11;
**characterized**
**in that** the maximum depth of the depression is 0.3 mm to 1.2 mm, preferably about 0.6 mm.

13. Synchronizer ring (1) according to one of Claims 9 to 12,
**characterized**
**in that** the synchronizer ring (1) is produced from a metal sheet, the thickness of which is 1.5 mm to 3.0 mm, preferably 1.6 mm to 1.9 mm.

## Revendications

1. Procédé de fabrication d'une bague de synchronisation (1) destinée à un dispositif de synchronisation, procédé dans lequel des dents de blocage (2) s'étendant radialement vers l'extérieur ou vers l'intérieur sont formées par un procédé de forgeage, lesquelles dents comportent une partie flanc (7) et deux flancs inclinés formant toit (8, 9) qui convergent dans un faîte commun (10),
**caractérisé en ce que**
un évidement (12, 13, 14, 15, 16, 17) est ménagé sur le côté arrière (11) d'une dent de blocage (2) qui est opposé au faîte (10).

2. Procédé selon la revendication 1,
**caractérisé en ce que**
un évidement (12) au moins approximativement en forme de demi-sphère ou de calotte sphérique est formé par matriçage.

3. Procédé selon la revendication 1,
**caractérisé en ce que**
un évidement (13) en forme de goutte est formé par matriçage qui est sphérique à une extrémité et en pointe à l'autre extrémité, l'extrémité en pointe étant dirigée radialement vers l'intérieur.

4. Procédé selon la revendication 1,
**caractérisé en ce que**
un évidement (14) en forme de goutte est formé par matriçage qui est sphérique à une extrémité et en pointe à l'autre extrémité, l'extrémité en pointe étant dirigée radialement vers l'extérieur.

5. Procédé selon la revendication 1,
**caractérisé en ce que**
un évidement (15), dont l'étendue axiale augmente radialement vers l'extrémité de la dent, est formé par matriçage.

6. Procédé selon la revendication 1,
**caractérisé en ce que**
un évidement (16, 17) est formé par matriçage, lequel est conçu comme une gorge s'étendant radialement.

7. Procédé selon la revendication 6,
**caractérisé en ce que**
la profondeur de la gorge augmente radialement en direction de l'extrémité de la dent.

8. Procédé selon l'une des revendications précédentes,
**caractérisé en ce que**
la bague de synchronisation (1) est réalisée à partir d'une tôle dont l'épaisseur va de 1,5 mm à 3,0 mm, de préférence de 1,6 mm à 1,9 mm.

9. Bague de synchronisation (1) destinée à un dispositif de synchronisation, qui comporte des dents de blocage (2) fabriquées par un procédé de forgeage et s'étendant radialement vers l'extérieur ou vers l'intérieur, lesquelles dents de blocage comportent chacune une partie flanc (7) et deux flancs inclinés formant toit (8, 9) qui convergent dans un faîte commun (10),
**caractérisé en ce que**
un évidement (12, 13, 14, 15, 16, 17) est ménagé sur le côté arrière (11) d'une dent de blocage (2) qui est opposé au flanc formant toit (8, 9).

10. Bague de synchronisation (1) selon la revendication 9,
**caractérisée en ce que**
elle est fabriquée par un procédé selon l'une des revendications 1 à 8.

11. Bague de synchronisation (1) selon la revendication 9 ou 10,
**caractérisée en ce que**
elle comporte l'un des évidements suivants (12, 13, 14, 15, 16, 17) :
- un évidement conçu au moins approximativement comme une demi-sphère ou une calotte sphérique ;
- un évidement en forme de goutte qui est sphérique à une extrémité et en pointe à l'autre extrémité, l'extrémité en pointe étant dirigée radialement vers l'intérieur ou radialement vers l'extérieur ;
- un évidement dont l'étendue axiale augmente radialement vers l'extérieur ;
- un évidement qui est conçu comme une gorge qui s'étend radialement, la profondeur de la gorge augmentant de préférence radialement vers l'extrémité de la dent.

12. Bague de synchronisation (1) selon l'une des revendications 9 à 11,
**caractérisée en ce que**
la profondeur maximale de l'évidement va de 0,3 mm à 1,2 mm, de préférence est d'environ 0,6 mm.

13. Bague de synchronisation (1) selon l'une des revendications 9 à 12,
**caractérisée en ce que**
la bague de synchronisation (1) est réalisée à partir d'une tôle dont l'épaisseur va de 1,5 mm à 3,0 mm, de préférence de 1,6 mm à 1,9 mm.
